# EUROPEAN PATENT SPECIFICATION

(11) **EP 0 588 775 B1**
(45) Date of publication and mention of the grant of the patent: **29.01.1997**
(21) Application number: 93850175.6
(22) Date of filing: 10.09.1993
(51) Int. Cl.: C05F 1/00, A23C 7/02

(54) **Process for utilizing dairy wastes**
Verfahren zur Benutzung von Milchabfallprodukten
Procédé d'utilisation de produits de déchets laitiers

(30) Priority: 11.09.1992 FI 924097
(43) Date of publication of application: 23.03.1994
(73) Proprietor: OSUUSKUNTA TUOTTAJAIN MAITO, 11100 Riihimäke (FI)
(72) Inventor: Ahonen, Heikki, SF-37630 Valkeakoski (FI); Juurinen, Jarmo, SF-11100 Riihimäke (FI); Ruikka, Jorma, SF-00730 Helsinki (FI)
(74) Representative: Säfwenberg, Björn

(56) References cited:
- EP-A- 0 311 977
- WO-A-89/03369
- DE-A- 2 341 043

## Description

The present invention concerns a process in accordance with the preamble of claim 1 for utilizing dairy wastes.

According to a process of the present kind, at least a part of the fat and most of the proteins contained in waste milk products are separated from said products in a manner known *per se* and these are then further processed in order to produce useful products.

The invention also relates to a fertilizer mixture according to the preamble of claim 7 which is intended for use in particular as a liquid fertilizer of garden and indoor plants.

Milk and products processed thereof belong to mankind's oldest feedstuffs. Generally, milk is obtained from cows and to some extent from goats. Chemically and as far as its nutritional physiology is concerned, milk is a full nutrient which contains almost all components needed by a growing animal. Thus, it is comprised of proteins, emulsified fats and milk sugar. In addition to these components milk contains calcium, phosphates and many trace elements as well as vitamins A, D, B and C.

Milk processing and milk treatment processes are operated under hygienic and sterile conditions. In dairies and cheese dairies (in the following also called "milk processing plants") all vessels used for milk transportation as well as the tanks of tank cars are cleaned each time they have been emptied. Therefore, a milk processing plant uses large amounts of water each day, the amount of water being more than twice the amount of milk intake. In addition to being cleaned, the containers and vessels as well as the production equipment are generally sterilized by acid and alkaline sterilization. The chemicals used for sterilization, i.e. nitric acid and sodium hydroxide, have so far primarily been discarded. Typically, the concentrations of all these liquid streams dumped have been rather low.

The loss of milk during dairy operations is about 0.6 % of the purchased milk. In addition there are various batches of milk which cannot be forwarded to further processing or to the consumers and which therefore are discarded.

As described above, at a milk processing plant there are certain problems with the fresh water and in particularly with the waste water at the same time as valuable chemicals are discarded and, as a result, cause pollution of the waters and the waste water purification plants.

The present invention aims at eliminating the problems related to the prior art while providing a process of a completely novel kind for utilizing the wastes of milk processing plants.

The invention is based on the concept that, first, the fats and proteins are separated either together or separately from the waste milk or from a milk product which otherwise is useless.

After the separation of the fats and the proteins, there will remain a fraction known as the whey of milk, which contains the milk sugar and the soluble nutrients, trace elements and water-soluble vitamins B and C of the milk. This whey is, for instance in the preparation of curd cheese, typically discarded or it is dried to form a milk sugar product. However, in connection with the present invention it has been found that the whey is very well suited to the use as a fertilizer, in particular if suitable nutrients are added thereto. Thus, according to the present invention, in the next stage of the process, nitric acid and potassium hydroxide are combined with the whey. The last-mentioned substances are preferably obtained from the sterilization waters of the equipment of the milk treatment plant. According to the invention, the NaOH-based alkali normally used for sterilization is therefore replaced by KOH, which in effect means that a non-nutrient has been substituted by a nutrient which is useful as far as further processing is concerned. During the addition of the nitric acid and the potassium hydroxide due care is taken that the pH of the whey does not drop so low as to cause precipitation of the remaining proteins. After this stage, depending on the intended use of the whey, additional nutrients and salts can, for instance, be added thereto.

WO-A-8903369 discloses a process for treatment of milk-containing waste waters from the diary industry comprising a biochemical prepurification followed by a chemical alkaline precipitation of the wastes to obtain a sludge which can be used as fodder by itself or can be mixed with known feeding agents. There is no suggestion in WO-A-8903369 of the addition of nitric acid and potassium hydroxide to the whey fraction remaining after the separation of the fats and proteins.

The novel fertilizer mixture according to the invention contains milk proteins, milk sugars and milk trace elements in addition to the known and commonly used nutrients. Furthermore, the potassium content of the fertilizer mixture is higher than that of milk, because it contains at least some of an alkaline sterilization solution based on potassium hydroxide.

More specifically, the process according to the invention is characterized by what is stated in the characterizing part of claim 1.

The fertilizer mixture is, again, characterized by what is stated in the characterizing part of claim 7.

Within the scope of the present invention, the term "waste milk product" designates milk batches which for some reason cannot be further processed or sold to the consumers and which, so far, have been discarded. The milk waste product can, for instance, comprise the rinsing waters of milk containers.

Milk contains several different proteins, such as casein, albumin and globulin. For the sake of simplicity the term "protein" is used in this application for all the different proteins, i.e. protein fractions, contained in milk. Similarly, the fat fraction of milk is called "fat". Said fraction comprises mainly triglycerides of butyric acid, caproic acid, caprylic acid, capric acid, lauric acid, myristic acid, palmitic acid, stearic acid and oleic acid. Small amounts of, for instance, lecithin are also present.

As mentioned above, for the purpose of this application, the term "whey" designates waste milk products, from which most part of the fat and protein have been removed. The dry matter content of the whey is normally about 1 to 10 wt-% and its fat and protein concentrations are about 0.01 to 1 wt-% and 0.01 to 5 wt-%, respectively.

"Milk processing plant" denotes dairies and cheese dairies and similar plants which process milk in order to form feedstuffs for humans and animals.

In the first stage of the process according to the invention, the fat and most of the protein of the waste milk product are removed. That separation can be carried out by using methods known *per se*, such as pH chock precipitation, heat denaturation-based precipitation and other methods based on, e.g. the use of electric fields (electrolytic electro-precipitation). The electro-precipitation is preferably carried out between two or more electrodes at a pH-value in the range from 5.5 to 4.4. By means of the above methods, the emulsions can be broken up. The protein can be coagulated by adding mineral acid rapidly to decrease the pH to below 2.5. For the purpose of heat denaturation, the waste milk is heated to above 50 °C.

The fat and protein fraction are then removed in, e.g., a clarifier. The separation can be enhanced by flotation, for instance by conducting air or another gas into the waste milk.

The fat-protein fraction whose dry substance typically is about 14 to 20 wt-% is recovered and can be used as such as a fodder. Alternatively, it can be used for the manufacture of protein-containing fat products, such as various face and skin creams. The fat and the proteins can also be separated from each other before any further treatment. According to a preferred embodiment of the invention, this separation is carried out by separately melting off fat from a mixture of protein and water and by centrifugating the melt product. It is, however, also possible to separate the fat by, e.g., supercritical extraction by carbon dioxide.

After the first process step the whey, which consists of water containing milk carbohydrates (sugars) and some organic acids, vitamins and protein and possibly small amounts of fat, is combined in the second step of the process with sterilization and rinsing waters of the milk processing plant. Said solutions contain nitric acid and potassium hydroxide. In most cases, the acid sterilization solution containing nitric acid and the alkaline sterilization solution containing potassium hydroxide are separately added to the whey, but it is also possible to mix the solutions together before adding them. If desired, nitric acid and potassium hydroxide can also be fed to the whey in the form of fresh chemicals; the potassium and the nitrate can, of course, also be added in the form of a potassium nitrate solution. When the nitric acid/potassium hydroxide is added due care is taken that the pH of the solution formed is so high that the remaining proteins of the whey do not coagulate. To some extent the lower pH limit depends on the waste water product, but it is typically about 2.5. After the addition of the sterilization solutions and after the evaporation described in further detail below, the nitric acid content is typically about 0.2 % and that of potassium hydroxide about 0.4 % by weight of a product evaporated to 1/5 of its original volume.

According to one embodiment of the invention, nitric acid and potassium hydroxide are added to the whey obtained after fat and protein separation only after the removal of most of the milk sugars (lactose). This additional step is taken when the milk sugar is intended to be used as a raw material of some processed products, such as dietary foodstuffs. The milk sugar contained in the whey does not, *per se*, hinder the use of the end product as a fertilizer. The milk sugar is for instance removed by fermentation or crystallization.

After the second process step, the solution can further be separately complemented with additional nitrogen-, phosphor- and potassium-containing nutrients which are suitable as far as the use of the solution as a fertilizer is concerned. It is also possible to add trace elements. Of the nitrogenous compounds, the following should be mentioned: ammonium salts and nitrates (e.g. ammonium nitrate). Of the phosphorous compounds, the phosphates can be mentioned (e.g. ammonium phosphate) and of the trace elements, the borates (e.g. sodium tetraborate) should be mentioned. However, also other substances commonly used in fertilizers can be used.

At a suitable stage of the process, the whey is evaporated. The purpose of this process step is to remove so much water that the milk-sugar-salt mixture of the whey becomes so concentrated that the salts added to the concentrated solution can prevent the whey from being subjected to yeast or bacterium fermentation at 38 °C. The solution should not, however, become so concentrated with respect to the salts that these would crystallize and separate from the liquid phase. The upper limit for the nutrient concentration is represented by their solubility at 0 °C. The evaporation of the whey can be carried out before the addition of the nitric acid/potassium hydroxide solutions or subsequent to it. Preferably, the whey is, however, evaporated before the introduction of additional nutrients, because the salts of these nutrient will make the evaporation more difficult. The combined stream of waste milk, rinsing water and sterilization solutions is evaporated to at least less than 1/2 of its original volume, preferably to less than 1/3 of its original volume and in particular to less than 1/5 of its original volume. From a technical and economical point of view, it is not sensible to evaporate the combined stream to less than 1/20 of its original volume.

The whey product produced by the process can be used for fertilizing plants, preferably in the form of a liquid fertilizer which can be applied during watering of the plants. The fertilizer mixture according to the invention is well suited to this purpose, because the nitrogenous nutrients contained therein at least partially consist of proteins and amino acids from which the nitrogen is slowly released. It has also been found that the biological soluble organic compounds contained in the whey, such as the sugars, organic acids etc. at small concentrations promote the growth of plants.

The condensed vapour can be circulated and used as cleansing and rinsing water of the milk treatment unit. Before being used for this purpose, said condensate is cleansed to remove volatile aroma substances by activated carbon filtration and it is sterilized by manners known *per* *se*, for instance by UV-radiation.

There are considerable advantages associated with the invention. Thus, by replacing the NaOH solution normally used in the sterilization of the milk processing plants by a KOH solution, all the wastes generated - except for the external car cleansing waters and sanitary waters - can be utilized and the valuable components thereof can be recovered. The recovered components of the milk can be sold ecologically and economically to the right place. At the same time further waste water loads are avoided and by circulating the condensate of the whey, the need for purchasing fresh water is diminished. As far as the dairy process technology is concerned, the process according to the invention therefore makes it possible to achieve a waste-less milk processing plant .

Furthermore it has surprisingly been found that the water regenerated by, for instance, compressor evaporation, is more inexpensive than the sum of the fresh water and the waste water treatment fee.

In the following, the invention will be examined in more detail with the aid of working examples:

### Example 1

Waste processed sour milk is treated with nitric acid addition based on pH shock so that by aeration the main part of the proteins - and the fat along with the proteins - was separated and emerged to the surface. 0.015 % of the fat and 0.60 % of the protein remained in the whey. The total dry matter content of said whey was 5.88 %. The mixture was evaporated to 1/3 of its original volume and 15.75 kg nitric acid, 6.0 kg potassium hydroxide and 5.1 kg monoammonium phosphate and 5.7 g sodium tetraborate were added for each 45 litre of the evaporated mixture.

The fertilizer solution obtained was diluted to 0.02 % with the aid of an automatic diluter and it was pumped for use as a watering fertilizer for straw berries.

The fertilizing results do not differ from those obtained with the best commercial watering fertilizer results. The taste of the strawberries was excellent and their texture was good.

### Example 2

The combined waste water of a dairy, whose dry matter content was 0.35 %, was electrolytically treated in an electric field between two electrodes manufactured of platinum at a pH value of 4.8 and at 25 °C. The voltage was 9 V and the current was 25 to 40 A. The waste water was pumped through the apparatus at a rate of 1500 l/h. For the electrolysis an apparatus supplied by Ekofloc Oy was used. After the electrolytic separation, before the evaporation of the purified product, an acid sterilization solution containing nitric acid and an alkaline sterilization solution containing potassium hydroxide obtained from the various stages of the rinsing, were added to the product. The separated fat and the protein was allowed to submerge and they were then separated by scraping.

The analysis shows that the degree of separation for fats was 93 % and for proteins 85 %.

The obtained substantially fat- and protein-free water was evaporated to 1/10 of its volume, its dry matter content being increased to 3.07 %. 0.40 kg/l of potassium nitrate and 0.11 kg/l of diammonium phosphate were added to the solution. It was mixed and then filtrated and used in a plant room as a fertilizer for cucumber and strawberries in the form of a 0.02 % solution.

## Claims

1. A process for utilization of milk-containing wastes of milk processing plants, according to which process
- most of the proteins and at least a part of the fat contained in the waste milk product are separated in a manner known per se from said product in order to produce a low-fat and low-protein whey fraction,
**characterized** in that
- after the separation of the fat and the protein, an acid sterilization solution containing nitric acid and an alkaline sterilization solution containing potassium hydroxide, or a mixture thereof, is added to the whey fraction,
- the whey fraction is evaporated at a suitable stage to less than 1/2 of its original volume,
- nitrogen-, phosphor- and potassium-containing nutrients are optionally added to the obtained product,
- the vapour of the evaporation is condensed and reused in the milk processing plant, and
- the evaporated solution is used as a plant fertilizer.

2. The process according to claim 1, **characterized** in that during the addition of the acid and the alkaline solutions to the whey fraction, the pH of the solution formed is kept so high that the remaining proteins of the whey do not coagulate.

3. The process according to claims 1 or 2, wherein the evaporation is carried out after the addition of the nitric acid and potassium hydroxide solutions, **characterized** in that the combined flow of waste milk, cleansing water and sterilizing solutions is evaporated to less than 1/3 of its original volume, preferably to less than 1/5 of its original volume.

4. The process according to claim 1, **characterized** in that at the most so much nutrients are added to the whey as will dissolve at 0 °C and at least so much that the whey does not ferment at a temperature of +38 °C.

5. The process according to claim 1, **characterized** in that after the separation of fat and protein, the main part of the milk sugars of the whey are removed by fermentation or crystallization before nitric acid and potassium hydroxide or mixtures thereof are added to it.

6. The process according to claim 1, **characterized** in that the condensed vapour is used as cleansing and rinsing water of the milk processing plant and that before that use it is freed from evaporated aroma substances by activated carbon filtration and sterilized by, for instance, UV-radiation.

7. Fertilizer mixture intended for use as a liquid fertilizer and which contains nutrients known to promote the growth of plants, **characterized** in that
- it contains at least some milk proteins, milk sugar compounds and some milk trace elements,
- its potassium content is higher than that of milk, and
- it has been prepared by
- separating most of the proteins and at least a part of the fat contained in a milk-containing waste product of a milk processing plant in order to produce a low-fat and low-protein whey fraction,
- adding to the whey fraction an acid sterilization solution containing nitric acid and an alkaline sterilization solution containing potassium hydroxide, or a mixture thereof, and
- evaporating the whey fraction to less than 1/2 of its original volume.

## Patentansprüche

1. Verfahren zur Verwertung von milchhaltigen Abfällen aus milchverarbeitenden Betrieben, wobei gemäß dem Verfahren
der Großteil der in dem Milchabfallprodukt enthaltenen Proteine und mindestens ein Teil des Fettes auf eine an sich bekannte Weise von dem Produkt abgetrennt werden, um eine fettarme und proteinarme Molkefraktion herzustellen,
dadurch gekennzeichnet, daß
nach dem Abtrennen des Fettes und des Proteins eine Salpetersäure enthaltende Säuresterilisierungslösung und eine Kaliumhydroxid enthaltende Alkalisterilisierungslösung oder eine Mischung davon zu der Molkefraktion gegeben werden;
die Molkefraktion in einem geeigneten Schritt auf weniger als 1/2 ihres ursprünglichen Volumens eingedampft wird;
zu dem erhaltenen Produkt gegebenenfalls stickstoff-, phosphor- und kaliumhaltige Nährstoffe gegeben werden;
der Dampf von dem Eindampfen kondensiert und in dem milchverarbeitenden Betrieb wieder verwendet wird; und
die eingedampfte Lösung als ein Pflanzendünger verwendet wird.

2. Verfahren gemäß Anspruch 1, dadurch gekennzeichnet, daß während der Zugabe der Säure- und Alkalilösungen zu der Molkefraktion der pH der gebildeten Lösung so hoch gehalten wird, daß die verbliebenen Proteine der Molke nicht koagulieren.

3. Verfahren gemäß Anspruch 1 oder 2, wobei das Eindampfen nach der Zugabe der Salpetersäure- und Kaliumhydroxidlösungen durchgeführt wird, dadurch gekennzeichnet, daß der vereinte Strom aus Abfallmilch, Reinigungswasser und Sterilisierungslösungen auf weniger als 1/3 seines ursprünglichen Volumens, vorzugsweise auf weniger als 1/5 seines ursprünglichen Volumens eingedampft wird.

4. Verfahren gemäß Anspruch 1, dadurch gekennzeichnet, daß höchstens so viele Nährstoffe zu der Molke gegeben werden, wie sich bei 0°C lösen, und mindestens so viel, daß die Molke bei einer Temperatur von +38°C nicht fermentiert.

5. Verfahren gemäß Anspruch 1, dadurch gekennzeichnet, daß nach dem Abtrennen von Fett und Protein, der Hauptteil der Milchzucker der Molke durch Fermentation oder Kristallisation entfernt werden, bevor Salpetersäure und Kaliumhydroxid oder deren Mischungen zugegeben werden.

6. Verfahren gemäß Anspruch 1, dadurch gekennzeichnet, daß der kondensierte Dampf als Reinigungs- und Spülwasser des milchverarbeitenden Betriebs verwendet wird, und daß er vor dieser Verwendung durch Aktivkohlefiltration von verdampften Aromasubstanzen befreit und durch zum Beispiel UV-Bestrahlung sterilisiert wird.

7. Düngermischung, welche für die Verwendung als ein flüssiger Dünger vorgesehen ist und welche als zur Unterstützung des Pflanzenwachstums bekannte Nährstoffe enthält, dadurch gekennzeichnet, daß
sie mindestens einige Milchproteine, Milchzuckerverbindungen und einige Spurenelemente der Milch enthält;
ihr Kaliumgehalt höher als der von Milch ist; und
sie hergestellt wurde durch
- Abtrennen des Großteils der Proteine und mindestens eines Teils des Fettes in einem milchhaltigen Abfallprodukt eines milchverarbeitenden Betriebs, um eine fettarme und proteinarme Molkefraktion herzustellen,
- Zugeben einer Salpetersäure enthaltenden Säuresterilisierungslösung und einer Kaliumhydroxid enthaltenden Alkalisterilisierungslösung oder einer Mischung davon zu der Molkefraktion; und
- Eindampfen der Molkefraktion auf weniger als 1/2 ihres ursprünglichen Volumens.

## Revendications

1. Procédé d'utilisation de déchets contenant du lait provenant des installations de traitement du lait selon lequel
- la plupart des protéines et au moins une partie des matières grasses contenues dans le déchet de produit laitier sont séparées d'une manière connue en soit dudit produit de façon à produire une fraction de lactosérum pauvre en matières grasses et pauvre en protéines,
caractérisé en ce que
- après la séparation des matières grasses et des protéines, on ajoute à la fraction de lactosérum une solution de stérilisation acide contenant de l'acide nitrique et une solution de stérilisation alcaline contenant de l'hydroxyde de potassium, ou un mélange de celles-ci,
- la fraction de lactosérum est évaporée à une étape convenable jusqu'à moins de 1/2 de son volume initial,
- on ajoute éventuellement au produit obtenu des substances nutritives contenant de l'azote, du phosphore et du potassium,
- la vapeur de l'évaporation est condensée et réutilisée dans l'installation de traitement du lait, et
- la solution évaporée est utilisée comme engrais pour les plantes.

2. Procédé selon la revendication 1, caractérisé en ce que pendant l'addition des solutions acide et alcaline à la fraction de lactosérum, le pH de la solution formée est maintenu tellement élevé que les protéines de lactosérum restantes ne se coagulent pas.

3. Procédé selon la revendication 1 ou 2, dans lequel l'évaporation est effectuée après l'addition des solutions d'acide nitrique et d'hydroxyde de potassium, caractérisé en ce que le flot combiné de déchets de lait, d'eau de nettoyage et de solutions de stérilisation est evaporé à moins de 1/3 de son volume initial, de préférence à moins de 1/5 de son volume initial.

4. Procédé selon la revendication 1, caractérisé en ce qu'au plus on ajoute au lactosérum autant de substances nutritives que l'on peut dissoudre à 0 °C et au moins suffisamment pour que le lactosérum ne fermente pas à une température de +38 °C.

5. Procédé selon la revendication 1, caractérisé en ce qu'après la séparation des matières grasses et des protéines, la majorité des sucres de lait du lactosérum sont éliminée par fermentation ou cristallisation avant d'y ajouter de l'acide nitrique et de l'hydroxyde de potassium ou des mélanges de ceux-ci.

6. Procédé selon la revendication 1, caractérisé en ce que la vapeur condensée est utilisée comme eau de nettoyage et de rinçage de l'installation de traitement du lait et qu'avant cette utilisation, elle est débarrassée des substances aromatiques evaporées par filtration sur charbon activé et stérilisée, par exemple, par les radiations UV.

7. Mélange d'engrais destiné à être utilisé comme engrais liquide et qui contient des substances nutritives connues pour favoriser la croissance des plantes, caractérisé en ce que
- il contient au moins certaines protéines du lait, des composés du sucre de lait et certains oligoéléments du lait,
- sa teneur en potassium est supérieure à celle du lait, est
- il a été préparé en
- séparant la plupart des protéines et au moins une partie des matières grasses contenues dans un déchet contenant du lait provenant d'une installation de traitement du lait de façon à produire une fraction de lactosérum pauvre en matières grasses et pauvre en protéines,
- adjoutant à la fraction de lactosérum une solution de stérilisation acide contenant de l'acide nitrique et une solution de stérilisation alcaline contenant de l'hydroxyde de potassium, ou un mélange de celles-ci, et
- évaporant la fraction de lactosérum à moins de 1/2 de son volume initial.
